# EUROPEAN PATENT SPECIFICATION

(11) **EP 0 871 939 B1**
(45) Date of publication and mention of the grant of the patent: **16.08.2000**
(21) Application number: 96943316.8
(22) Date of filing: 26.12.1996
(51) Int. Cl.: G06F 17/30

(54) **FLEXIBLE HYPERLINK ASSOCIATION SYSTEM AND METHOD**
FLEXIBLES SYSTEM UND VERFAHREN ZUM VERKNÜPFEN VON HYPERLINKS
SYSTEME ET PROCEDE D'ASSOCIATION SOUPLE PAR HYPERLIEN

(30) Priority: 02.01.1996 US 582004; 03.12.1996 US 757137
(43) Date of publication of application: 21.10.1998
(60) Divisional application: 00101890.2
(73) Proprietor: DreamTechnologies Co., Ltd., Tokyo (JP)
(72) Inventor: TABUCHI, Daisuke, Chiyoda-ku, Tokyo 101 (JP); SHOJI, Wataru, Chiyoda-ku, Tokyo 101 (JP); NAKAJIMA, Ichiro, Chiyoda-ku, Tokyo 101 (JP); GRAMLICH, Gabriele, Sofmap Future Design Inc., D-51381 Leverkusen (DE)
(74) Representative: Heusler, Wolfgang, Dipl.-Ing.
(86) International application number: PCT/JP96/03835
(87) International publication number: WO 97/24684

(56) References cited:
- WO-A-95/04974
- IEEE MULTIMEDIA, vol. 1, no. 1, 21 March 1994, pages 60-68, XP000440889 HALL W: "ENDING THE TYRANNY OF THE BUTTON"
- IEICE TRANSACTIONS ON INFORMATION AND SYSTEMS, vol. E78-D, no. 11, 1 November 1995, pages 1343-1352, XP000553521 QIAN Q ET AL: "ABSTRACTION AND INHERITANCE OF HYPERLINKS IN AN OBJECT-ORIENTED HYPERTEXT DATABASE SYSTEM TEXTLINK/GEM"

## Description

### FIELD OF THE INVENTION

The present invention relates to computer programs, and more particularly to computer programs which can associate an operation performed by a computer with captured data appearing on a display device of the computer.

### BACKGROUND OF THE INVENTION

Many computer programs display information on a display device, such as a video monitor. The information is generally in the form of text and graphic data. It is sometimes desirable to allow a user to highlight a portion of the displayed information and the computer program immediately performs a desired operation related to the highlighted information. Two examples are described below to show the usefulness of such ability. One example is a children's learning program in which a child can type in a word anywhere on the display device, press a pre-assigned key, and the computer can pronounce the word. In another example, the information is a regular text document generated by a commonly used word processing program (e.g., Microsoft Word or WordPerfect). A user can highlight a word in the document, press a pre-assigned key, and a multimedia (audio, graphic, etc.) presentation related to the highlighted word is played.

There are prior art programs which associate a text string or an icon with specific operations of a computer. For example, many educational programs display text and graphics on a computer monitor. A child can highlight a word (or click on an icon) and the computer programs can pronounce the word (or perform a predetermined operation associated with the icon). However, the position and content of the highlighted area is fixed because it is generated by the computer program. Thus, the computer program can easily determine the word being highlighted based on its position (instead of its content), and perform the necessary operations. These programs do not allow a child to type in any word at any position on the display device, and then performed an operation related to the content of the word. Further, the association between the highlighted word and the operation (e.g., pronounce the word) is fixed, and the user cannot alter the relationship.

There are "hyperlinked" documents which allow a user to highlight an object, and the associated programs will link the object to other documents. One example is documents coded in a standard Hypertext Markup Language (HTML) format. These documents are typically used in a world-wide computer network called the Internet. A user can use a browser to retrieve an HTML document from a remote server and display it on his computer. Typically, the display contains text and graphics, although it is possible to show sound and movie. These documents embed links to other HTML documents. The user can click on predetermined locations of the document, and a predetermined HTML document will be retrieved from the same or another server. However, all the links are built in the HTML document. The user cannot create a new link or alter the position and content of the embed link.

It is however known from the article "Ending the Tyranny of the Button" (IEEE Multimedia, vol. 1, no. 1, 21 March 1994, pages 60 to 68) to store link information in linkbases rather than into the document itself.

Many word processing programs allow a user to highlight a word, press a pre-assigned key (e.g., one of the F-keys in a IBM compatible personal computer), and change the display format of the word (e.g., bold, italics, etc.). These word processing programs perform the same operation every time the same pre-assigned key is pressed. The operation does not depend on the content of the highlighted word.

### SUMMARY OF THE INVENTION

The invention provides, in accordance with the appended independent claims, methods for use in a computer system and computer systems for performing an operation associated with data on a display device and chosen by a user.

### BRIEF DESCRIPTION OF THE DRAWINGS

Fig. 1 is a schematic drawing of a computer system operating according to the first embodiment of the present invention.

Fig. 2 is a flow chart of a clipboard scanning cell according to the first embodiment of the present invention.

Fig. 3A is a flow chart of a hyperlink cell according to the first embodiment of the present invention.

Fig. 3B is a flow chart of another hyperlink cell according to the first embodiment of the present invention.

Fig. 4 is a schematic diagram of a "bossless" digital cell technology which can be used to implement the clipboard scanning cell and hyperlink cell according to the first embodiment of the present invention.

Fig. 5 is a drawing showing the structure of an application using the bossless architecture used to implement the clipboard scanning cell and hyperlink cell according to the first embodiment of the present invention.

Fig. 6 is a block diagram showing the logical structure of a DNA file associated with a hyperlink cell according to the first embodiment of the present invention.

Fig. 7 is a block diagram of the logical structure of a cell according to the first embodiment of the present invention.

Fig. 8 is a drawing to illustrate an example of flexible hyperlink association system according to the first embodiment of the present invention.

Fig. 9 is a schematic drawing of a computer system operating according to the second embodiment of the present invention.

Fig. 10 is a flow chart of a clipboard scanning cell according to the second embodiment of the present invention.

Fig. 11 is a flow chart of a hyperlink and branch cell according to the second embodiment of the present invention.

Fig. 12 is a block diagram showing the logical structure of a DNA file associated with a hyperlink and branch cell according to the second embodiment of the present invention.

Fig. 13 is a block diagram of a computer system which can be used to run the flexible hyperlink association program of the present invention.

### DETAILED DESCRIPTION OF THE INVENTION

The present invention is directed to a novel flexible hyperlink association system. The following description is presented to enable any person skilled in the art to make and use the invention. Descriptions of specific applications are provided only as examples. Various modifications to the preferred embodiments will be readily apparent to those skilled in the art, and the general principles defined herein may be applied to other embodiments and applications without departing from the spirit and scope of the invention. Thus, the present invention is not intended to be limited to the embodiments shown, but is to be accorded the widest scope consistent with the principles and features disclosed herein.

### First Embodiment

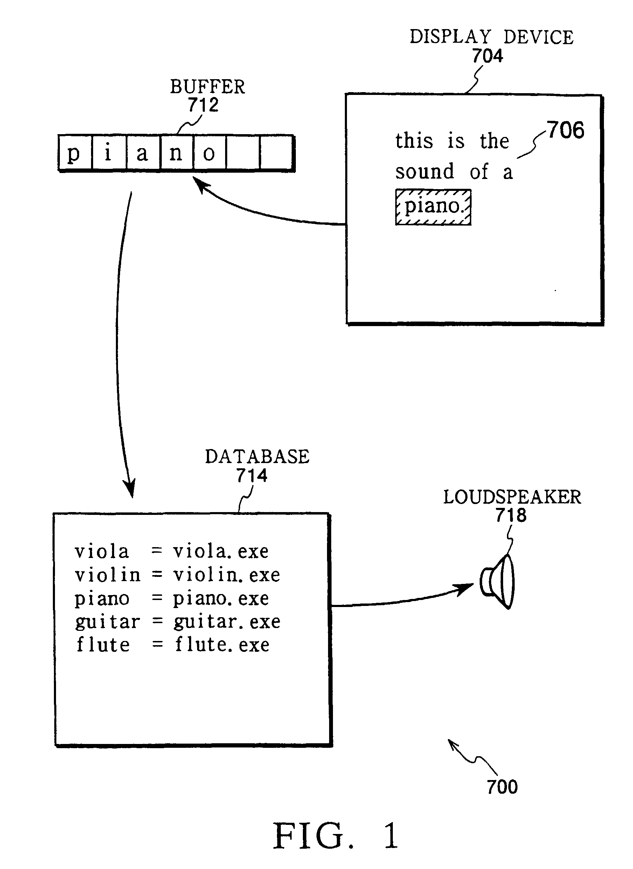

Fig. 1 is a schematic drawing of a computer system 700 which is able to implement a flexible hyperlink association system according to the first embodiment of the present invention. Computer system 700 contains a display device 704. An exemplary ASCII character string 706, "this is the sound of a piano", is displayed on display device 704. The word "piano" is highlighted. A user presses a pre-assigned key, e.g., control-C. Computer system 700 captures the highlighted word, "piano" in a buffer 712. It should be appreciated that the word can be captured to buffer 712 while it is being highlighted or after the pre-assigned key is pressed.

After the pre-assigned key is pressed, computer system 700 accesses a database 714 already loaded in the system memory of computer system 700. Database 714 contains a plurality of lines. Each line can be considered a record, which contains the name of a musical instrument, an equal sign, and the name of a program module (e.g., a file having an "EXE" extension). The equal sign is an association symbol. The operation performed by the program module corresponds to the operation performed by computer system 700. It should be appreciated that any symbol could be used as an association symbol. The programs associated with the operations could have any format executable by computer system 700 (e.g., files having "WAV", "BMP" and other extensions).

In this embodiment, computer system 700 compares the word in buffer 712 with the words in database 714 to the left of the equal sign. A match is found, and the program corresponds to the word "piano" is "piano.exe". Computer system 700 then invokes the program "piano.exe". This program causes computer system 700 to play a piece of piano music. As a result, a piece of piano music is played by loudspeaker 718.

In a computer system, the operating system determines the steps need to be taken to invoke a program module. It should be easy for persons skilled in the art to write a routine which can follow these steps to invoke a desired program module listed in database 714.

It can be seen from Fig. 1 that the word "piano" can occur anywhere on display device 704. Further, the program being executed depends on the content of the highlighted word. Thus, a different program will be executed if a different word is highlighted.

In database 714 of Fig. 1, the name of the program (e.g., piano.exe) is textually similar to its associated word (e.g., piano). It should be noted that the two could be completely different.

The way data is highlighted depends on the structure of computer system 700. In a IBM-compatible computer running under Microsoft Windows environment, data can be highlighted by positioning a cursor (not shown) at a first location on display device 704, depressing a button on a mouse (not shown), and moving the cursor to a second location. Other programs highlight data using other procedures (e.g., Wordperfect running under Microsoft DOS requires the use of a pre-assigned key, "F12", to designate the beginning of highlighted data).

In this embodiment, database 714 has been loaded into system memory from nonvolatile memory (e.g., hard disk, floppy diskette, or CD-ROM) prior to the pressing of the pre-assigned key. It is possible for the user to load a different database into the system memory. It is also possible for the user to load a plurality of databases into the system memory, and select one of these databases (or switch to a different database) to be an active database for comparing with the highlighted word. For example, the user can select a database associating words with graphic images. In this case, a picture of a piano would be displayed when the word "piano" is highlighted.

The flexible hyperlink association system of according to the first embodiment of the present invention can be implemented using a novel "bossless" computer program architecture comprising a plurality of program modules called "cells." Under this architecture, each cell is hierarchically equal, i.e., there is no controlling (or boss) cell. An application can start from any cell, and can terminate at any cell. Typically, many cells are executing either sequentially or concurrently. Various applications can be designed by controlling the operation of these cells. A detailed description of this computer program architecture can be found in copending the United States patent application (Serial No. 08/539,806) filed October 5,1995 and corresponding International patent application (Serial No. JP 96/00821) filed March 28,1996. These copending patent applications are hereby incorporated by reference. A detailed description of using this architecture to implement the flexible hyperlink association system according to the first embodiment of the present invention is provided below in a separate section.

In the first embodiment of the flexible hyperlink association system, two cell are created to implement the system. One cell is called a clipboard scanning cell and the other cell is called a hyperlink cell. The clipboard scanning cell places highlighted text string in a clipboard buffer commonly used in a windows based operating environment (e.g., Microsoft's Windows software). The clipboard scanning cell is also responsible for detecting the pressing of a pre-assigned key by a user. The second cell is a hyperlink cell which compares the text string in the clipboard with text strings in a database. It also causes the computer system to execute appropriate operations when the text string in the clipboard matches a text string in the database. If there is no match, the hyperlink cell allows a user to edit the database and enter an operation associated with the unmatched text string.

Each cell is associated with a file, called a DNA file. The characteristics and operation of the cells are determined by their associated DNA files. Cells communicate by writing statements to the DNA files associated with other cells using a protocol called digital shifting function (DSF). Once written, the origin of these DSF statements is ignored. There is no need to "return" to the cells which originate the statements. Further, the DSF statements are executed by the cells without regard to their origins.

The cells execute DSF statements in their associated DNA files. These statements are executed sequentially. The cells retain full control of the execution, i.e., there is no need to turn over execution to other cells during or after the execution of statements. There is no need to report to other cells on the status or results of execution.

In a preferred computer system of the present invention, many cells (in addition to the clipboard scanning and hyperlink cells) are executing in the computer system. Various applications can be designed by controlling the operation of these cells.

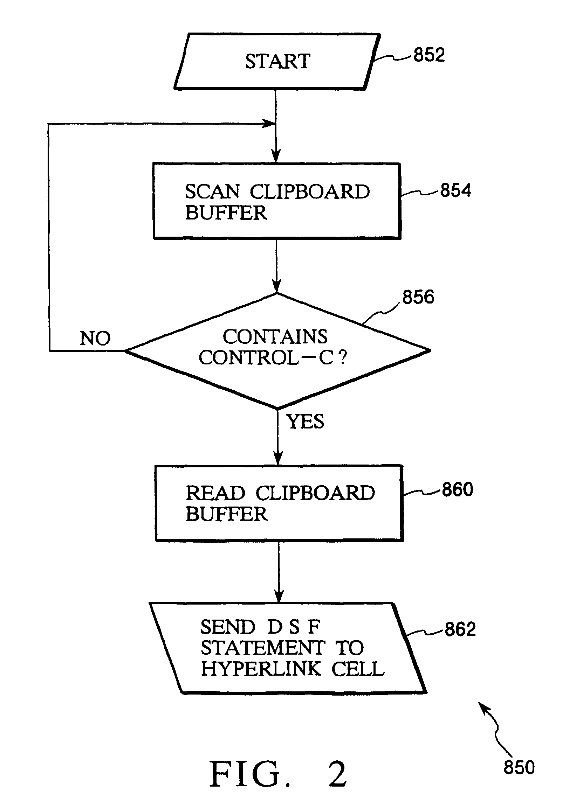

Fig. 2 is a flow chart 850 of a clipboard scanning cell according to the first embodiment of the present invention. Flow chart 850 starts at step 852. At predetermined time periods, the clipboard scanning cell scans the clipboard buffer, which is maintained by MS Windows (step 854). In step 856, the scanning cell determines whether the buffer contains a Control-C symbol. If this symbol is not detected, flow chart 850 branches back to step 854. If this symbol is detected, scanning cell reads the content of the clipboard (step 860). It then sends a DSF statement to a hyperlink cell (step 862). For example, if the content of the clipboard buffer is a word "piano", the syntax of the DSF statement is "SEARCH piano", where the word "piano" is a parameter of the SEARCH statement corresponding to the content of the clipboard.

It should be appreciated that the control-C key and the "SEARCH" keyword are exemplary. Other symbols and keywords could be used.

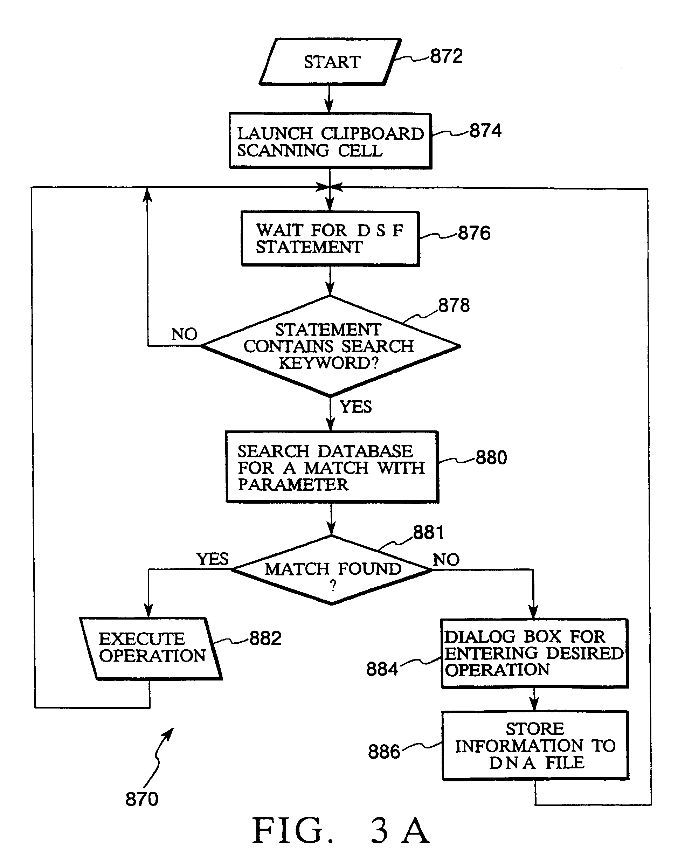

Fig. 3A is a flow chart 870 of a hyperiink cell according to the first embodiment of the present invention. In this embodiment, the database (corresponding to database 714 of Fig. 1) accessible by the hyperlink cell is stored in its DNA file. Flow chart 870 starts at step 872. At step 874, it launches the clipboard scanning cell. Flow chart 870 then waits for a DSF statement from the scanning cell (step 876). If a DSF statement is received, flow chart 870 determines whether the DSF statement contains a "SEARCH" keyword (step 878). If the "SEARCH" keyword is not found, flow chart 870 branches back to step 876. If a "SEARCH" statement is received from the scanning cell, the hyperlink cell searches its DNA file (i.e., database) for a record having a field which is the same as the parameter in the "SEARCH" statement (step 880). Flow chart 870 then determines whether there is a match (step 881). If such a record exists, the operation associated with this parameter is performed (step 882). Flow chart 870 then branches back to step 876 and wait for another DSF statement. If such a record does not exist, flow chart 870 goes into an edit mode. A dialogue box is displayed asking a user to enter the operation to be associated with this parameter (step 884). This information is stored in the DNA file of the hyperlink cell (step 886). Flow chart 870 then branches back to step 876 to wait for another DSF statement.

It should be appreciated that the database could be stored in any place. The DNA file of hyperlink cell is merely a convenient place to hold the database.

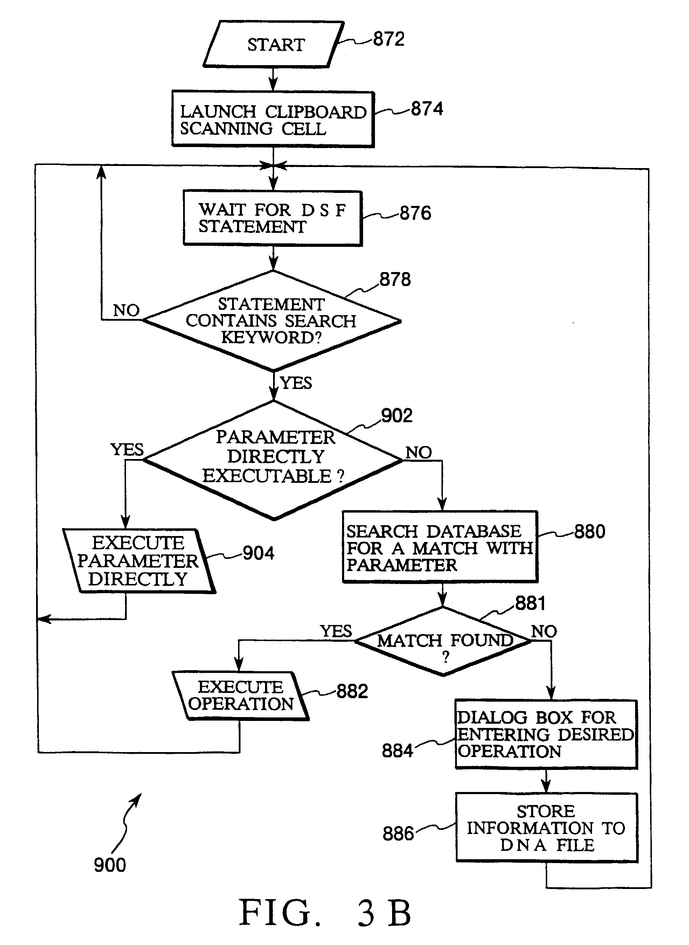

Fig. 3B is a flow chart 900 of another hyperlink cell according to the first embodiment of the present invention. Common reference numerals in flow charts 870 and 900 refer to the same steps. In flow chart 900, two new steps (step 902 and 904) can be inserted between step 878 (i.e., received a "SEARCH" statement) and 880 (i.e., search the database). After a "SEARCH" statement is received, flow chart 900 determines whether the parameter can be executed directly without searching the database (step 902). If the answer is yes (i.e., parameter directly executable), flow chart 900 executes the parameter directly (step 904). For example, if the parameter (i.e., highlighted word) is a executable filename (as determined by the underlying operating system), it is directly executable. An alternative design is to execute parameters having predefined extensions (e.g., "WAV","BMP", "EXE", etc.). In this case, computer system 700 searches for a file in the hard disk having the same filename as the ASCII characters in the parameter. When such a file is found, the computer program stored in the file is then launched. Flow chart 900 then branches to step 876 (i.e., wait for another DSF statement). If the answer is negative (i.e., parameter not directly executable), flow chart 900 branches to step 880 (i.e., search the database).

It should also be appreciated that steps 902 and 904 could be inserted into other places of flow chart 870. For example, these two steps could be inserted between steps 881 and 884. Further, a single cell combining the functionalities of the hyperlink and clipboard scanning cells can be used in the present invention (i.e., the single cell can implement the capturing of data, comparing with a database, and invoking a computer operation).

It should also be appreciated that the flexible hyperlink association system can be implemented using convention computer program architecture instead of the bossless computer architecture. In this case, the hyperlink and clipboard scanning cells can be implemented as two conventional procedures. The communication between the two procedures can be implemented using ordinary procedure calls and using a storage area accessible by both procedures (i.e., one procedure can write to and the other procedure can read from the common storage area). Further, it is possible to use one procedure to implement the capturing of data, comparing with a database, and invoking a computer operation.

It should be appreciated that the flexible hyperlink association system of the invention using bossless architecture called "the digital cell technology" increases efficiency.

The digital cell technology can be considered a "bossless" architecture because every program module is on equal footing with other program modules. There is no module that controls the overall operation of the program (i.e., no boss).

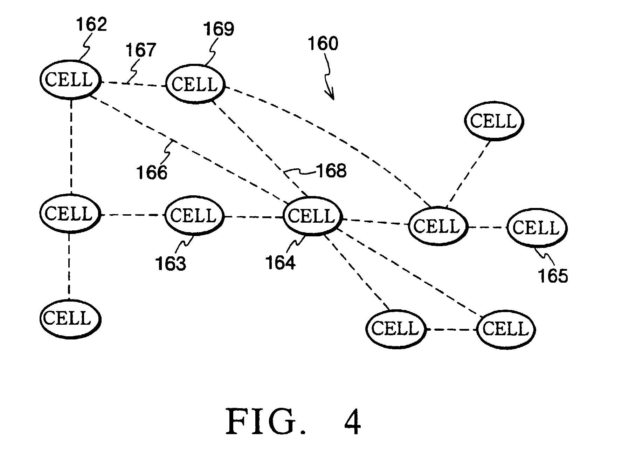

Fig. 4 is a schematic view of an application 160 based on the bossless architecture. Application 160 comprises a plurality of program modules, such as modules 162-165. Each program module (called a "cell" in the present invention) is the same as the other cells in an hierarchical sense. Cells are linked together in a novel way in which no history or linkage information needs to be retained. Each link is independent. For example, there is no need for links to be active simultaneously. Each link is direct, i.e., two cells can be linked directly without the need of using one or more intermediate links. For example, cells 162 and 164 can be linked directly using line 166 instead of using lines 167 and 168 and passing through an intermediate cell. An application can be formed by defining the cells involved and using the novel link of the present invention.

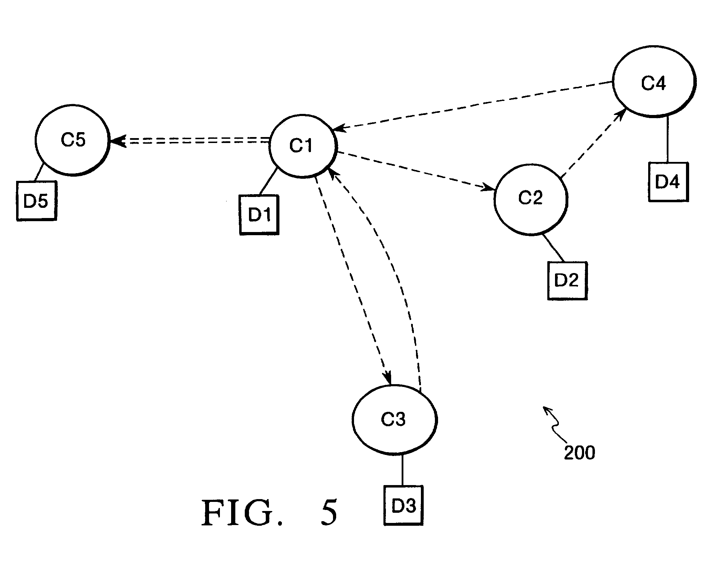

Fig. 5 is a drawing showing the structure of an application 200 using the bossless architecture. Application 200 contains a plurality of cells, labeled as C1-C5, loaded and executing in RAM. Each cell has an associated file (labeled as D1-D5), called DNA file, which contains information of the cell. The term "DNA" is used here in analogy with the biological relationship between a living cell and its DNA. At a desired time, cell C1 can send statements (called "DSF statements") to cell C2 using a protocol called digital shifting function ("DSF") protocol. Cell C2 will execute these statements. The detail structures of cells, DNA files and the DSF protocol will be described below.

A cell can also invoke another cell (e.g., cell C1 can invoke cell C5, as indicated by the double dashed line), if that cell is not already loaded and running in RAM. The invoked cell (i.e., cell C5) could be completely independent of the invoking cell(i.e., cell C1) after invocation. Thus, the invoking cell is not the boss of the invoked cell and the two cells are hierarchically at the same level. This is completely different from the prior art in which an invoking program module is at a hierarchical different level as the invoked program module.

As explained below, a cell can be implemented as an ".EXE" file (in the MS DOS or MS Windows environment), and can be loaded into RAM for execution using well known methods in accordance with the operating environment. The cell's associated DNA file can also be loaded into RAM. The invoked cell takes on the attributes stored in its DNA cell. It is also possible to modify the DNA file when the cell is invoked or while running by writing to the file (which could be an ASCII file). As a result, the architecture provide a flexible approach to build applications.

It can be seen from Fig. 5 that the bossless architecture has a flat structure instead of a hierarchical architecture. Each of the cells C1-C5 is an independent executable routine which is at the same hierarchical level as other executable routines. No cell functions as a boss for other cells. Consequently, this architecture is called a bossless architecture.

This architecture allows an application to start at any cell. Other cells can be invoked as needed. This architecture also allows an application to end at any cell. Because there is no chain to unwind, the cells can terminate immediately. There is no need to return to the "boss" program before exiting the application. In one embodiment of the present invention, a cell can exit the application at a predetermined time after invocation of a new cell. In another embodiment of the present invention, other cells can send a DSF statement to this cell requesting it to terminate.

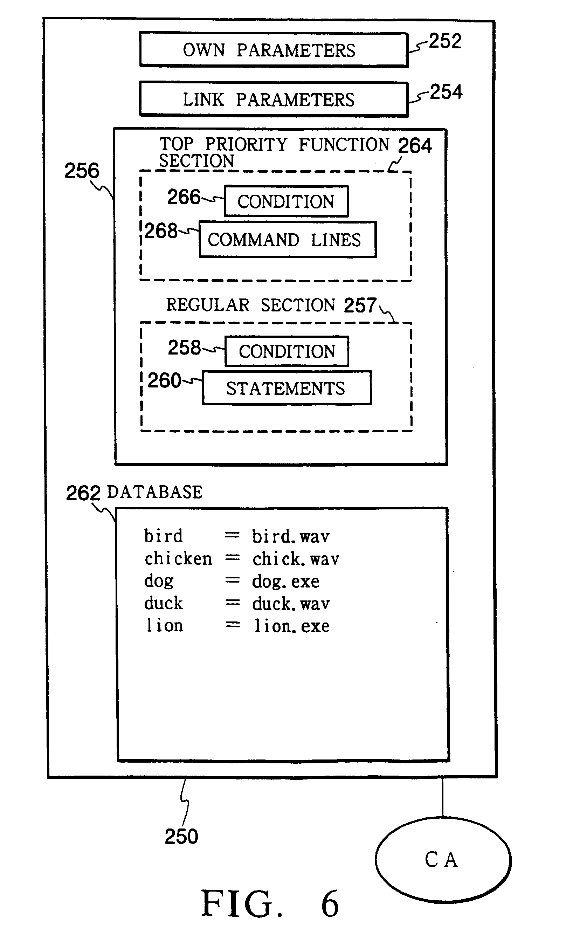

Fig. 6 is a block diagram showing the logic structure of a DNA file 250 associated with a cell, such as cell CA. File 250 has a section 252 containing parameters ("own parameters") related to the characteristics of cell CA itself. For example, section 252 may contain parameters related to the way cell CA manifest itself when invoked: the window size and background color of cell CA, the name of cell CA, the names of audio files associated with its invocation and termination, etc.

File 250 also contains a section 254 containing linking parameters ("link parameters") on cells related to cell CA. Examples of the parameters contained in this section are: the names, symbols and positions of the other cells. One of the parameter is "close," which is interpreted as closing cell CA when the cell associated with this parameter is invoked.

If cell CA is a hyperlink cell, file 250 contains a section 262 containing the associated database information. The length of this section could be very long, if the size of the database is large. In one embodiment of the present invention, the content of section 262 is similar to the form shown in database 714 of Fig. 1. Thus, the equal sign is used as the association symbol, the left hand side contains the words to be compared, and the right hand side contains the executable filenames associated with the words at the left hand side.

File 250 further contains a DSF information section 256. This section contains a regular statements section 257 and a top priority function section 264. The structure of the regular section 257 and top priority function section 264 are substantially the same, except that top priority function section 264 has a higher priority in statement execution. These two sections contain individual headers for identifying the sections (e.g., each section headed by a different name or symbol).

Regular section 257 contains a "condition" section 258 and a statements section 260. Statements section 260 comprises DSF statements sent to cell CA by other cells. Statements in statements section 260 are executed sequentially. Each statement also contains parameters necessary for the execution of the statement. Condition section 258 comprises three components: (a) a first pointer to the last DSF statement currently existing in statements section 260, (ii) a second pointer to the current DSF statement being processed by cell CA, and (iii) the current status of the cell. Examples of status are: ready, busy, lock, and never.

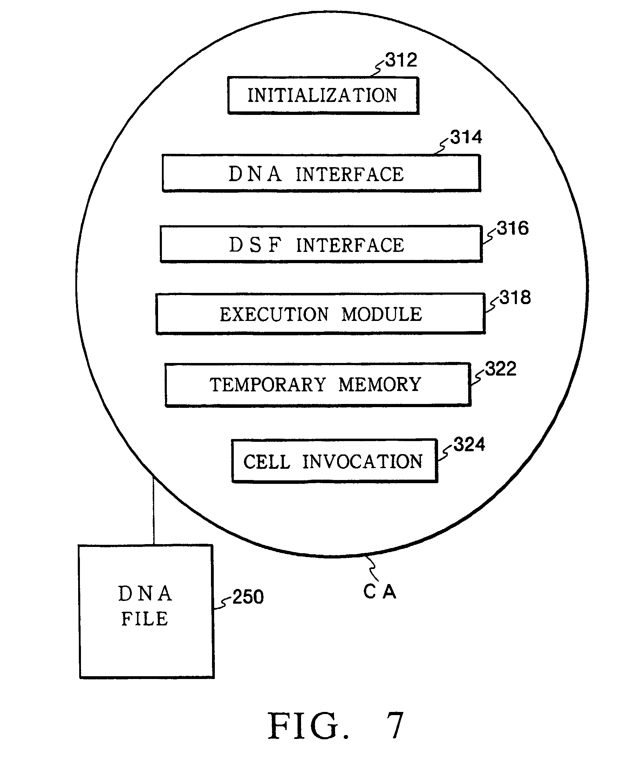

Top priority function section 264 contains a condition section 266 and a command lines section 268. The structure of condition section 266 is similar to the structure of condition section 258 (e.g., both sections contain two pointers). Command lines section 268 contains executable command lines which are sent by other cells using DSF (or similar) protocol. The command lines have a higher execution priority than the statements in statements section 260 (the details of execution priority will be discussed below in connection with Fig. 7). The command lines in command lines section 268 are executed sequentially. Examples of commands in section 268 are close, min (for minimizing a window), max (for maximizing a window), restore, etc.

It should be appreciated that the logic structure shown in Fig. 6 can be implemented using one or more physical files. Further, portions of the logical sections may intermingle physically. In one embodiment of the present invention, the DNA file is a text file. Thus, the content of the DNA file can be modified by using a regular text editor.

Statements sent by one cell to another follow the DSF protocol. A sending cell (e.g., cell CS) sets up a communication link with the DNA file 250 associated with cell CA. Specifically, it looks up the address of DNA file 250 and determines whether DNA file 250 is able to accept DSF statements (e.g., at a "ready" state) by examining its status in condition section 258. Statements will be issued by cell CS only when cell CA is ready to accept them. In one embodiment, the issuance of statements involves writing ASCII characters to statements section 260 of DNA file 250.

When cell CS is authorized to issue statements to cell CA, cell CS reads the first pointer (in condition section 258) to the last DSF statement to determine the appropriate address to write the DSF statements. It is important not to overwrite DSF statements already existed in cell CA. Cell CS writes DSF statements to statements section 260 of DNA file 250. Cell CS also updates the first pointer in condition section 258 so as to point to the last DSF statement newly written into statements section 260. The communication link between cells CA and CS is terminated. It can be seen that cell CA and DNA file 250 do not maintain record (i.e., history) indicated that these new statements originate from cell CS.

It should be appreciated that the above described DSF protocol is only an exemplary protocol. Other protocol could be used to write DSF statements to cells. For example, different pointer structures can be used, e.g., the first pointer can point to the position after the last DSF statement. Different types of status and different ways for checking status information can be used. Further, the statements could be stored in accordance with a logic structure instead of stored physically in a sequential manner. For example, the statements could be organized into groups with the address of each group pointed to by a pointer.

Command lines are sent by one cell to another using a protocol substantially the same as the DSF protocol. Because regular statements section 257 and top priority function section 264 have different headers, the sending cell can distinguish between these two sections and write to the appropriate section. Other means for identifying these two section can also be used (e.g., maintaining separate linked lists of statements and command lines).

Because DSF statements/commands are executed sequentially (either physically or logically), cell CA needs to complete execution of statements/commands (if any) preceding the above mentioned statements/commands written by cell CS. This set of previously written statements/commands are likely to be written by other cells (although it is also possible that it is written by cell CS in a prior communication link).

Fig. 7 shows the structure of cell CA. It is grouped logically into a plurality of sections, each implemented using instructions executable by a computer. Cell CA contains an initialization section 312 and a DNA interface section 314. DNA interface section 314 allows cell CA to read from and write to its corresponding DNA tile 250. Initialization section 312 takes care of housekeeping tasks when invoked, including reading parameters from "own parameters" section 252 of DNA file 250. Cell CA also contains a section 316 for processing DSF protocol. This section contains code (or program instructions) for sending and receiving statements/command lines using the DSF protocol.

Cell CA contains an execution section 318 containing code for automatically executing statements and command lines in DNA file 250 written by other cells. The code sequentially read and execute statements in statements section 260 of DNA file 250. After each statement is executed, cell CA branch to top priority function section 259 and executes all the command lines therein. Cell CA then executes the next statement in statement section 260.

Cell CA contains a temporary memory section 322 for storing temporary information. As an example, it is possible to change attributes (e.g., background color and the size of the display window) of cell CA during its execution. In one embodiment of the present invention, the changed attributes are temporarily stored in temporary memory section 322 instead of immediately being written to DNA file 250. In this embodiment of cell CA, the attribute information stored in temporary memory section 322 is written into "own parameters" section 252 of DNA file 250 only when cell CA is terminated.

Cell CA also contains a cell invocation section 324 for invoking other cells. In one embodiment of the present invention, this section obtains information about the cell desired to be invoked and pass this information to a specialized cell which actually invoke the desired cell. It is also possible to incorporate the functionality of this specialized cell in the cell invocation section of cell CA and other cells.

It should be appreciated that the above mentioned sections in cell CA are grouped logically, and portions of these sections could intermingle physically.

Typically, the size of each cell is small and the function of the cell well defined. Consequently, the execution speed is fast. As a result of the small size and specialized function, the cells can be easily written to fully utilize the resources of a computer. The communication between cells using DSF is direct, with minimum amount of access to the operating system on which an application is run. As a result, the efficiency is high.

The architecture of the digital cell technology comprises at least two cells which can communicate with each other. The cells are encapsulated program modules that are specialized for their designed tasks. Therefore, applications developed using the present architecture comprise of multiple executables which can run independently or concurrently. The cells interact with each other using the inventive DSF protocol. Each cell can control the action of other cells. For example, a first cell can control a second cell, and the second cell can control the first cell. Therefore, no single cell has complete control over the other cells, or in other words, there is no boss. On the other hand, under conventional architectures, program modules subordinate to a boss cannot control the boss. Another unique characteristic of the present architecture is that the cell that receives a command does not keep any information of where the command came from. This lack of historical knowledge allows cells to move forward instead of going backward in a link.

One of the embodiments of the present invention is an application development system which runs under Microsoft's MS Windows. In this environment, cells are programs stored as ".EXE" files and typically show a window on a computer monitor when invoked. By linking these cells, a user can construct an application software just like assembling blocks. Each cell, with its specific function, is given another function or value through DSF protocol with other cells to produce a variety of applications.

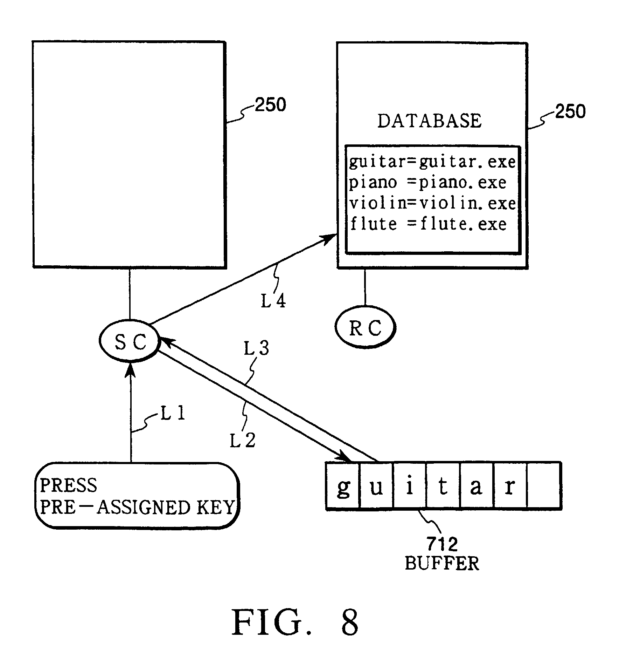

An example is used to illustrate the flexible hyperlink association system of the first embodiment using digital sell technology referring to Fig. 8. In this example, scanning cell SC is invoked in response to the depression of a pre-assigned key (L1). At the time of the activation of cell SC, DSF statements, "scan the buffer," "determine if a string of characters is present in the buffer: terminate if not present," "read a string of characters from the buffer," and "send a search statement to hyperlink cell RC: the parameter is the read string of characters," are described in the statement section 260 in the DNA file 250 of cell SC. The "search statement" means the DSF statement that instructs search. Scanning cell SC sequentially executes those DSF statements.

First, cell SC scans the buffer 712 in accordance with the DSF statement (L2) to determine if a character string is present. When determining that no character string is present, cell SC terminates the process. When determining that there is a character string, cell SC reads the character string from the buffer 712 ("guitar" in Fig. 8) (L3). Using the read character string as a parameter, cell SC then sends the search statement "search the data base: the parameter is guitar" to the DNA file 250 of hyperlink cell RC (L4).

When the DNA file 250 of hyperlink cell RC receives the search statement from the scanning cell SC, the statement "search the data base: the parameter is guitar" is described in the statement section 260 in the DNA file 250 of cell RC. Cell RC executes this search statement. That is, cell RC searches the data base in the DNA file 250 for the character string "guitar." The search result is sent to cell RC itself. In accordance with the received search result, cell RC describes a DSF statement in its own DNA file 250.

When the parameter exists in the data base, hyperlink cell RC describes "execute a program linked to the parameter" in the statement section 260 in its own DNA file 250. When the parameter does not exist, however, cell RC describes "display the dialog box," "store in the data base: parameter = input program name" and "execute a program indicated by the input program name." Cell RC sequentially executes those DSF statements in accordance with the search result.

When the character string "guitar" is found in the data base, hyperlink cell RC describes the aforementioned associated DSF statement in its own DNA file 250 and executes the program "guitar.exe" which is linked to the character string "guitar" in the data base in accordance with that DSF statement. If the character string "guitar" is not in the data base, cell RC describes the associated DSF statements in its own DNA file 250, in accordance with which it displays the dialog box to allow the user to enter the program name linked to the parameter, newly stores a record of a predetermined format (guitar = input program name) in the data base in the DNA file 250 and executes the program indicated by the input program name.

As apparent from the above, those cells are independently executed except in the case where the scanning cell sends a search statement to the link cell, a fast data link system which hardly produces overheads can be accomplished.

The buffer memory 712 may be designed to be able to store data of various kinds of formats, such as graphics data, in addition to character data. In this case, the data base 714 also stores the graphics data together with a program associated with the graphics data. For instance, when the user designates a figure (e.g., the figure of a musical instrument like piano or guitar) displayed on the display device, its graphics data is stored in the buffer memory 712. The CPU 702 detects graphics data, associated with the graphics data stored in the buffer memory 712, from the data base 714, and invokes the program which is linked by the association symbol (e.g., the program which reproduces sounds of piano, guitar or the like). This modification can therefore cope with a variety of applications.

### Second Embodiment

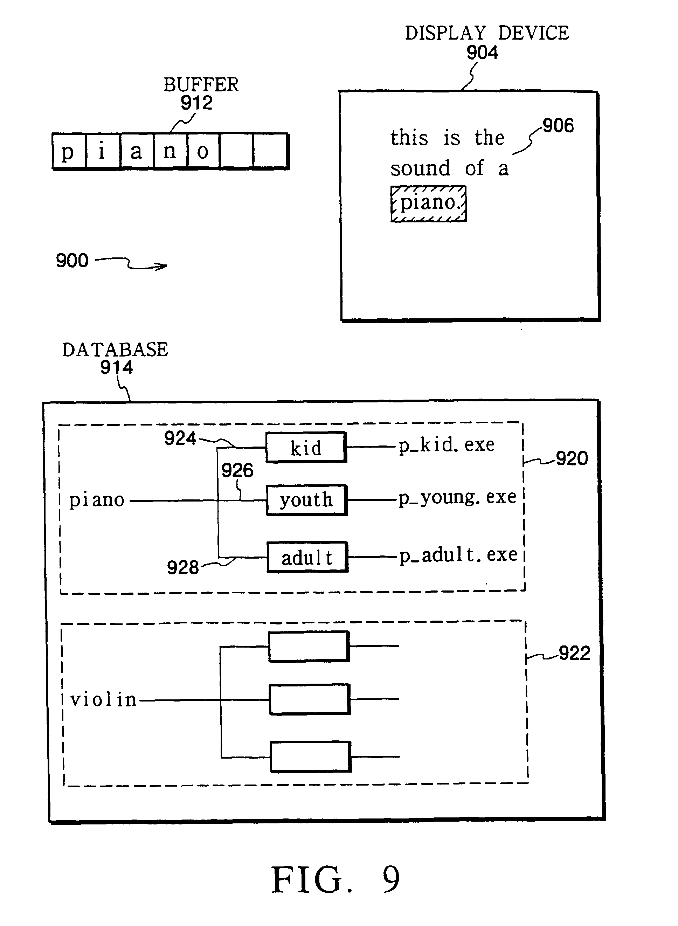

Fig. 9 is a schematic drawing of a computer system 900 which is able to implement a flexible hyperlink association system according to the second embodiment of this invention. Computer system 900 contains a display device 904. An exemplary ASCII character string 906, "this is the piano", is displayed on display device 904. The word "piano" is highlighted. When a user depresses a pre-assigned key, e.g., control-C, computer system 900 captures the highlighted word, "piano" in a buffer 912. It should be appreciated that the word can be captured to buffer 912 while it is being highlighted or after the pre-assigned key is depressed.

After the pre-assigned key is depressed, computer system 900 accesses a database 914 already loaded in the system memory of computer system 900. Database 914 contains a plurality of records each keyed to the name of a musical instrument (such as record 920 keyed to the word "piano", record 922 keyed to the word "violin"). Each record contains one or more branches which are selectable based on predetermined pieces of information (or a predetermined method of obtaining the information). For example, the "piano" record contains three different branches selectable based on the age of the user (this information can be previously obtained from the user). The first branch (branch 924) is invoked if the user is a kid (e.g., ten years old or younger). A module "p_kid.exe" is executed which draws a picture of the piano and plays a short piece of piano music. The second branch (branch 926) is invoked if the user is a youth (e.g., between eleven and eighteen years old). A module "p_young.exe" is executed which displays simple written information about a piano, in addition to drawing a picture of the piano and playing piano music. The written information is not displayed when executing "p_kid.exe" because a kid would not be interested in reading written information. The third branch (branch 928) is invoked if the user is an adult (e.g., nineteen and older). A module "p_adult.exe" is executed which displays detailed written information of a piano (e.g., its history and how it works).

In the second embodiment, computer system 900 compares the word in buffer 912 with the key-words (e.g., "piano" and "violin") in database 914. If a match is found, computer system 900 then retrieves a previously entered selection information (e.g., the age of the user) and uses it to select a branch. Different program module is executed depending on the selection information.

The number of branches in the above example is exemplary. For example, there could be one or more branches for the key "violin". The number of records in the above example is also exemplary. In addition, the information used for the selection could be obtained dynamically, e.g., just prior to the selection, instead of relying on fixed information. Examples of dynamic information are the time of the day when the user typed in the word "piano," or the status of remote users if the computer is connected to a network system.

The flexible hyperlink association system according to the second embodiment of this invention can also be implemented using the digital cell technology explained in the first embodiment.

In the second embodiment, two cell are created to implement the system. One cell is clipboard scanning cell and the other cell is hyperlink and branch cell. The clipboard scanning cell places highlighted text string in a clipboard buffer commonly used in a windows based operating environment. The clipboard scanning cell is also responsible for detecting the depressing of a pre-assigned key by a user. The hyperlink and branch cell compares the text string in the clipboard with keys in a database. The hyperlink and branch cell also causes the computer system to execute appropriate program modules based on previously stored or dynamic information. If there is no match, the hyperlink and branch cell allows a user to edit the database. The user can enters a new record with a key and branch.

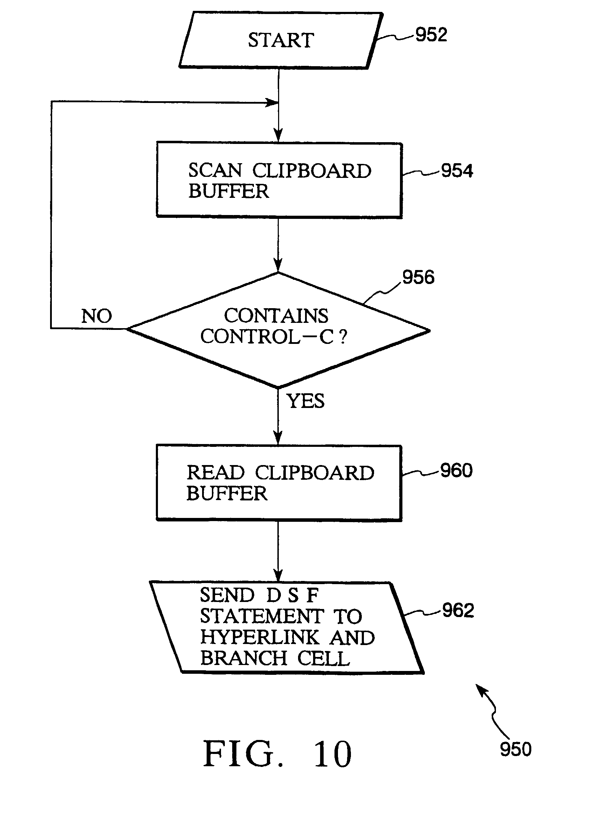

Fig. 10 is a flow chart 950 of a clipboard scanning cell according to the second embodiment of this invention. Flow chart 950 starts at step 952. At predetermined time periods, the clipboard scanning cell scans the clipboard buffer, which is maintained by MS endows (step 954). In step 856, the scanning cell determines whether the buffer contains a Control-C symbol. If this symbol is not detected, flow chart 950 branches back to step 954. If this symbol is detected, scanning cell reads the content of the clipboard (step 960). It then sends a DSF statement to a hyperlink and branch cell (step 962). For example, if the content of the clipboard buffer is a word "piano", the syntax of the DSF statement is "SEARCH piano", where the word "piano" is a parameter of the SEARCH statement corresponding to the content of the clipboard.

It should be appreciated that the control-C key and the "SEARCH" keyword are exemplary. Other symbols and keywords could be used.

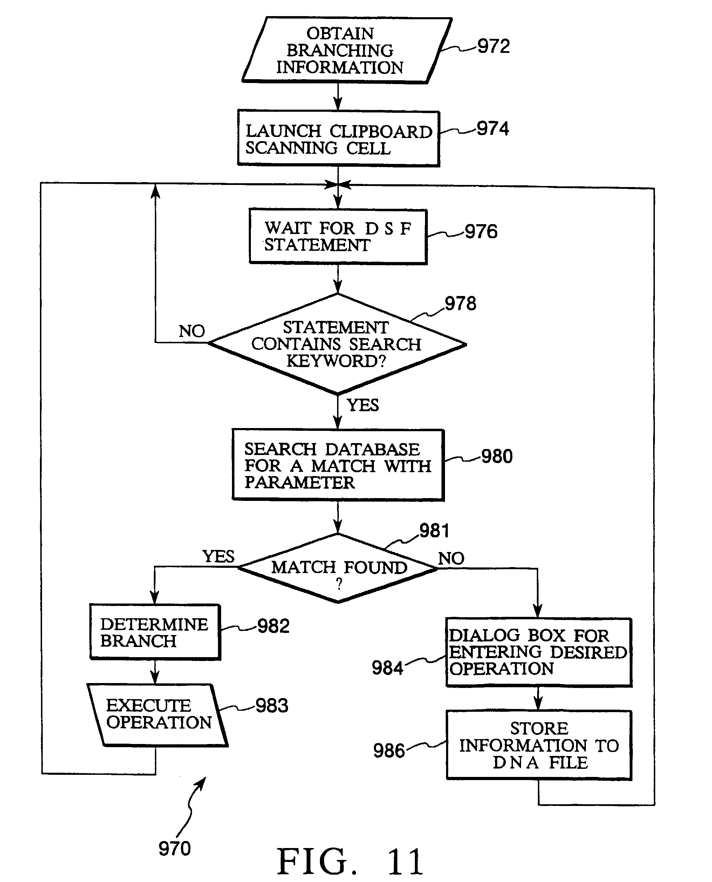

Fig. 11 is a flow chart 970 of a hyperlink and branch cell according to the second embodiment of the present invention. In the second embodiment, the database (corresponding to database 914 of fig. 9) accessible by the hyperlink and branch cell is stored in its DNA file. At step 972, flow chart 970 obtains branching (or selection) information for performing subsequent branching (e.g., the age of the user). At step 974, it launches the clipboard scanning cell. Flow chart 970 then waits for a DSF statement from the scanning cell (step 976). If a DSF statement is received, flow chart 970 determines whether the DSF statement contains a "SEARCH" keyword (step 978). If the "SEARCH" keyword is not found, flow chart 970 branches back to step 976. If a "SEARCH" statement is received from the scanning cell, the hyperlink and branch cell searches its DNA file (i.e., database) for a record having a key-word which is the same as the parameter in the "SEARCH" statement (step 980). Flow chart 970 then determines whether there is a match (step 981). If there is a match, flow chart 970 then uses the branching information (obtained from step 972) to determine which branch to execute (step 982). The operation associated with the selected branch is performed, e.g., the corresponding cell is invoked (step 983). Flow chart 970 then branches back to step 976 and waits for another DSF statement.

If the parameter in the "SEARCH" statement does not match any of the key-word in the database, flow chart 970 goes into an edit mode. A dialogue box is displayed asking a user to enter the branches, the conditions associated with the branches, and a program module (or cell) associated with each branch (step 984). This information is stored in the DNA file of the hyperlink and branch cell (step 986). Flow chart 970 then branches back to step 976 to wait for another DSF statement.

It should also be appreciated that the flexible hyperlink association system according to the second embodiment can be implemented using convention computer program architecture instead of the digital cell technology. In this case, the clipboard scanning cell and hyperlink and branch cell can be implemented as two conventional procedures. The communication between the two procedures can be implemented using ordinary procedure calls and a storage area accessible by both procedure. Further, it is possible to use one procedure to implement all above mentioned steps (e.g., the capturing of data, comparing with a database, branching and invoking a computer operation).

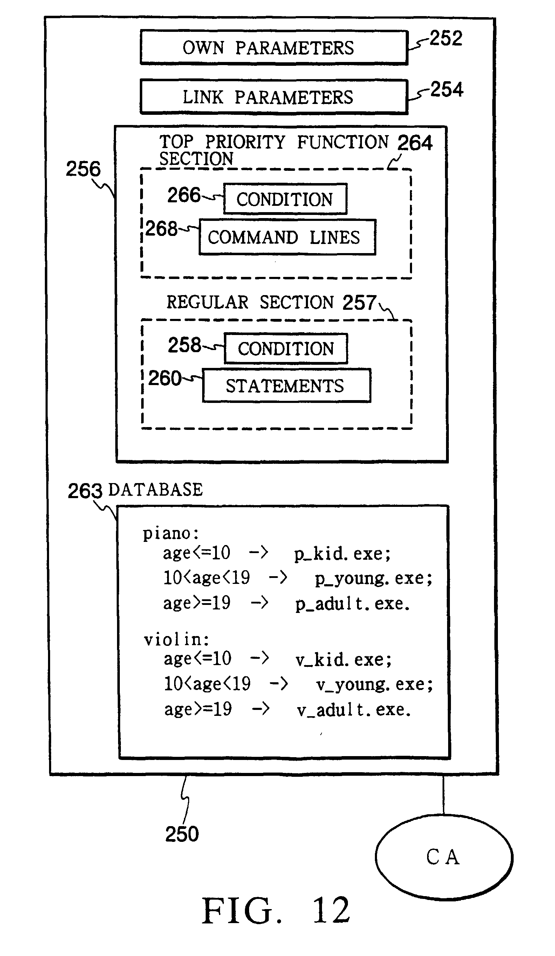

The DNA file of the hyperlink and branch cell in this embodiment is the same as the DNA file of a hyperlink cell described in the first embodiment, except for the database section 263. Fig. 12 is a block diagram showing the logic structure of a DNA file 250 associated with a hyperlink and branch cell in this embodiment.

File 250 contains a section 263 containing the associated database information. The length of this section could be very long, if the size of the database is large. The database contains means for identifying the keys in a record. In this example, a line containing a predetermined symbol, e.g., ":", indicates that the word to the left of the symbol is a key. Thus, the line "piano:" is interpreted to mean that the word "piano" is a key. Section 263 also contains means for identifying a branching condition. In this example, logic relationships to the left of another predetermined symbol ,e.g.,"->", indicate a branching condition. Thus, the relationship "age<=10" is a condition. Section 263 contains means for identifying an operation associated with a branching condition. In this example, an executable program to the right of the above described "->" symbol indicates a program associated with the condition to the left of the symbol. Thus, the program "p_kid.exe" is associated with users equal to or under ten years old. A predetermined symbol ";" is used to indicate the end of a branch and a predetermined symbol "." is used to indicate the end of a record.

Note that the above described symbols and database format are exemplary. Other symbols and database format could be used.

File 250 contains other section. These sections are the same as the corresponding sections described in the "hyperlink cell" in the first embodiment. Specially, it contains (a) a section 252 containing parameters related to the characteristics of the hyperlink and branch cell itself; (b) a section 254 containing linking parameters on cells related to the hyperlink and branch cell, and (c) a DSF information section 256 which further includes a regular statements section 257 and a top priority function section 264. Regular section 257 contains a "condition" section 258 and a statements section 260. Top priority function section 264 contains a condition section 266 and command lines section 268.

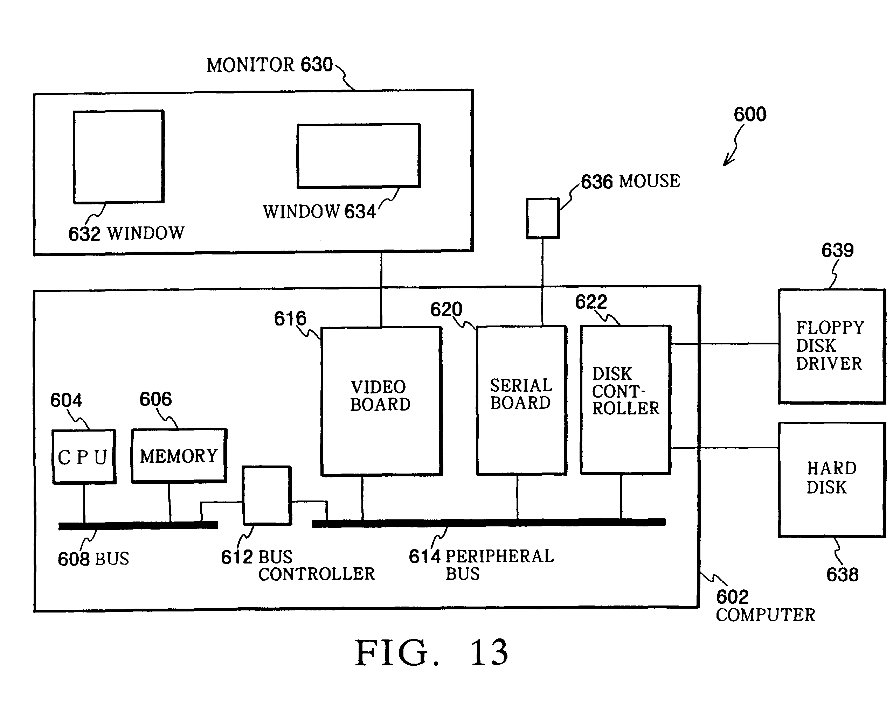

Fig. 13 shows a block diagram of a computer system 600 which can be used to run the database system of the present invention. Computer system 600 comprises a computer 602 having a central processing unit (CPU) 604 and system memory 606, which could be random access memory (RAM) or read- only memory (ROM), coupled to a system bus 608. Computer 602 also contains a peripheral bus controller 612 for controlling a peripheral bus 614. Depending on the architecture of computer 602, peripheral bus 614 could be a PCI bus, VESI local bus, ISA bus, or other similar buses. Peripheral bus 612 allows peripheral boards to be connected to computer 602. Examples of peripheral boards are a video board 616, a serial board 620 and a disk controller board 622. CPU 604 and RAM 606 can communicate with the peripheral boards through peripheral bus controller 612.

Serial board 620 allows serial communication between computer 602 and one or more external serial devices, such as a mouse 636.

Video board 616 contains circuits to control a monitor 630 and display images thereon. Video board 616 also contains memory (not shown) associated with such display. The memory is preferably a special kind of memory integrated circuit device, called video RAM (VRAM), designed for video applications. The circuits draws images on monitor 630 based on information stored in the memory. The images are on monitor 630 are updated at predetermined time intervals.

If computer system 600 is used to run programs in a windows-based environment, one or more windows, such as a windows 632 and 634, could be displayed on monitor 630.

Disk controller board 622 is connected to a hard disk 638 and a floppy disk driver 639. The MS Windows and the operating system are generally stored in hard disk 638. The cells can be stored in floppy diskettes and downloaded into hard disk 638. In one embodiment of the present invention, individual cells (e.g., the hyperlink cell, the clipboard scanning cell, and hyperlink and branch cell) and the databases can be stored in diskette. These diskettes can be distributed to end users. The diskettes can be loaded into hard disk 638.

An application cell (such as a word processor cell) is loaded into system memory 606 and executing in computer system 600. A user can enter text (such as text string 706 in Fig. 1) into a window on monitor 630. The hyperlink and clipboard scanning and hyperlink and branch cells are also loaded into system memory 606. If the database is not stored in the DNA file of hyperlink cell and hyperlink and branch cell, the database is also be loaded into system memory 606. The location of the database should be identified to the hyperlink cell and hyperlink and branch cell so that the hyperlink cell amd hyperlink and branch cell can access the database. The user can then invoke different computer operations using the procedure described in connection with Fig. 1 and Fig. 9.

The invention has been described with reference to a specific exemplary embodiment thereof: Various modification and changes may be made thereunto without departing from the scope of the invention. The specification and drawings are, accordingly, to be regarded in an illustrative rather than a restrictive sense; the invention is limited only by the provided claims.

## Claims

1. A method for a computer to perform an operation associated with data on a display device and chosen by a user, comprising the steps of:
providing a database containing a list of data and a list of program modules, members of said list of data being associated with members of said list of program modules;
highlighting desired data on said display device;
comparing said highlighted data with said members in said list of data;
if a match is found, executing said program module associated with said matched member; and
editing said database to associate a program module with said highlighted data if said highlighted data does not match any member in said list of data.

2. The method of claim 1 wherein said editing step further comprises the step of providing a dialogue box for entering the name of a computer module associated with said unmatched highlighted data.

3. The method of claim 1 further comprising the step of capturing said highlighted data into a buffer, wherein said comparing step compares data in said buffer with said members in said list of data.

4. The method of claim 3 wherein said buffer is a clipboard buffer.

5. The method of claim 1 wherein said data base includes a first database and a second database each containing a list of data and a list of program modules, members of said list of data being associated with members of said list of program modules;
and wherein further comprising selecting step of selecting one of said first and said second databases to be an active database; and
said comparing step compares said highlighted data with said members in said list of data of said active database.

6. The method of claim 5 further comprising the step of capturing said highlighted data into a buffer, wherein said comparing step compares data in said buffer with said members in said list of data of said active database.

7. A method for a computer to perform an operation associated with data on a display device which has been chosen by a user, comprising the steps of:
providing a database containing a plurality of records, each record containing a key and at least one branch, each branch being associated with a program module;
obtaining data highlighted on said display device;
comparing said highlighted data with said keys;
if a match is found, selecting a branch based on a predefined criterion and executing said program module associated with said branch; and
if a match is not found, editing said database to associate a key with said highlighted data.

8. The method of claim 7 wherein said editing step further comprising the step of providing a dialogue box for entering branches, criteria, and program modules.

9. The method of claim 7 wherein said obtaining step comprises the step of capturing said highlighted data into a buffer.

10. The method of claim 9 wherein said buffer is a clipboard buffer.

11. The method according to claim 7 wherein
said data base includes a first database and a second database each containing a plurality of records, each record containing a key and at least one branch, each branch being associated with a program module;
further includes the step of selecting one of said first and said second databases to be an active database; and
said comparing step compares said highlighted data with said keys in said selected database; and
said selecting step selects a branch in said selected database based on a predefined criterion if a match is found.

12. The method of claim 11 wherein said obtaining step comprises the step of capturing highlighted data into a buffer.

13. A computer system for performing an operation associated with data on a display device (704) and chosen by a user, comprising:
a database (714) containing a list of data and a list of program modules, members of said list of data being associated with members of said list of program modules;
means for highlighting desired data on said display device (704);
means for matching said highlighted data with one of said members in said list of data;
means for executing said program module associated with said matched member;
means for editing said data base to associate a program module with said highlighted data if said highlighted data does not match any member in said list of data; and
a buffer (712) for storing said highlighted data and means for capturing said highlighted data to said buffer, said means for matching said data in said buffer with one of said members in said list of data.

14. The computer system according to claim 13 further comprising:
a first computer program and a second computer program;
said first computer program comprising:
means for capturing said highlighted data; and
means for sending said captured data to said second computer program; and
said second computer program comprising:
means for receiving said captured data from said first computer program;
means for matching said captured data with said members in said list of data; and
means for executing said program module associated with said matched member.

15. A computer system for performing an operation associated with data on a display device (904) which has been chosen by a user, comprising:
a database (914) containing a plurality of records (920, 922), each record containing a key and at least one branch, each branch being associated with a program module;
means for highlighting desired data on said display device (904);
means for matching said highlighted data with said keys;
means for selecting a branch based on a predefined criterion if a match between said highlighted data and one of said keys is found;
means for executing said program module associated with said branch; and
means for editing said database to associate a key with said highlighted data if said highlighted data does not match any member in said list of data.

16. The computer system of claim 15 further comprising a buffer (912) for storing said highlighted data and means for capturing said highlighted data to said buffer, wherein said means for matching matches said data in said buffer with said keys.

17. The computer system according to claim 15, further comprising:
a first computer program and a second computer program;
said first computer program comprising:
means for capturing said highlighted data; and
means for sending said captured data to said second computer program; and
said second computer program comprising:
means for receiving said captured data from said first computer program;
said means for matching said captured data with said keys;
said means for selecting a branch based on a predefined criterion if a match between said highlighted data and one of said keys is found; and
said means for executing said program module associated with said branch.

## Patentansprüche

1. Verfahren zur Durchführung einer Computeroperation im Zusammenhang mit auf einem Display erscheinenden Daten, die von einem Benutzer ausgewählt sind, mit den Schritten:
Vorsehen einer Datenbank, die eine Liste von Daten und eine Liste von Programm-Modulen enthält, bei denen Elemente der Datenliste Elementen der Programm-Module zugeordnet sind;
Markierung gewünschter Daten auf dem Display;
Vergleichen der markierten Daten mit Elementen der Datenliste;
bei Feststellung einer Übereinstimmung Abarbeiten eines einem übereinstimmendem Element zugeordneten Programm-Moduls; und
Editieren der Datenbank, um dann, wenn die markierten Daten nicht zu einem Element der Datenliste passen, den markierten Daten einen Programm-Modul zuzuordnen.

2. Verfahren nach Anspruch 1, bei welchem der Editierschritt den weiteren Schritt umfaßt, eine Dialogbox vorzusehen zur Eingabe des Namens eines den nicht passenden markierten Daten zugeordneten Computermoduls.

3. Verfahren nach Anspruch 1 mit dem weiteren Schritt der Einspeicherung der markierten Daten in einen Puffer, wobei in dem Vergleichsschritt im Puffer befindliche Daten mit Elementen der Datenliste verglichen werden.

4. Verfahren nach Anspruch 3, dadurch gekennzeichnet, daß der Puffer ein Zwischenablage(Clipboard)-Puffer ist.

5. Verfahren nach Anspruch 1, bei welchem die Datenbank eine erste und eine zweiten Datenbank beinhaltet, von denen jede eine Datenliste und eine Programm-Modul-Liste enthält, wobei Elemente der Datenliste Elementen der Programm-Modul-Liste zugeordnet sind;
und wobei weiterhin ein Auswahlschritt vorgesehen ist zur Auswahl der ersten oder der zweiten Datenbank als aktive Datenbank; und
wobei in dem Vergleichsschritt die markierten Daten mit Elementen der Datenliste der aktiven Datenbank verglichen werden.

6. Verfahren nach Anspruch 5 mit dem weiteren Schritt der Speicherung der markierten Daten in einen Puffer, wobei in dem Vergleichsschritt Daten im Puffer mit den Elementen in der Datenliste der aktiven Datenbank verglichen werden.

7. Verfahren zur Durchführung einer Computeroperation im Zusammenhang mit auf einem Display erscheinenden Daten, die von einem Benutzer ausgewählt sind, mit den Schritten:
Erstellen einer Datenbank, die eine Mehrzahl von Aufzeichnungen enthält, von denen jede einen Schlüssel und mindestens einen Zweig enthält und jeder Zweig einem Programm-Modul zugeordnet ist;
Gewinnung von auf dem Display markierten Daten;
Vergleichen der markierten Daten mit den Schlüsseln;
Auswahl des Zweiges, wenn eine Übereinstimmung gefunden wurde, aufgrund eines vordefinierten Kriteriums und Abarbeiten des zu dem Zweig gehörigen Programm-Moduls; und
Editieren der Datenbank, wenn keine Übereinstimmung gefunden wurde, um den markierten Daten einen Schlüssel zuzuordnen.

8. Verfahren nach Anspruch 7, bei welchem der Editierschritt den weiteren Schritt umfaßt, eine Dialogbox zur Eingabe vom Zweigen, Kriterien und Programm-Modulen vorzusehen.

9. Verfahren nach Anspruch 7, bei welchem der Gewinnungsschritt den Schritt der Speicherung der markierten Daten in einem Speicher umfaßt.

10. Verfahren nach Anspruch 9, dadurch gekennzeichnet, daß der Speicher ein Zwischenablage(Clipboard)-Speicher ist.

11. Verfahren nach Anspruch 7, bei welchem die Datenbank eine erste und eine zweiten Datenbank beinhaltet, von denen jede eine Mehrzahl von Aufzeichnungen enthält, wobei jede Aufzeichnung einen Schlüssel und mindestens einen Zweig enthält und jeder Zweig einem Programm-Modul zugeordnet ist;
mit dem weiteren Schritt der Auswahl der ersten oder der zweiten Datenbank als aktive Datenbank;
wobei in dem Vergleichsschritt die markierten Daten mit den Schlüsseln in der ausgewählten Datenbank verglichen werden; und
in dem Auswahlschritt ein Zweig aus der gewählten Datenbank aufgrund eines vordefinierten Kriteriums ausgewählt wird, wenn eine Übereinstimmung gefunden wurde.

12. Verfahren nach Anspruch 11, bei welchem der Gewinnungsschritt das Speichern markierter Daten in einen Speicher umfaßt.

13. Computersystem zur Durchführung einer Operation im Zusammenhang mit auf einem Display (704) erscheinenden Daten, die von einem Benutzer ausgewählt sind, mit
einer Datenbank (714), welche eine Liste von Daten und eine Liste von Programm-Modulen enthält, wobei Elemente der Datenliste Elementen der Programm-Modul-Liste zugeordnet sind;
eine Einrichtung zur Markierung gewünschter Daten auf dem Display (704);
eine Einrichtung, um die markierten Daten mit einem der Elemente der Datenliste zur Übereinstimmung zu bringen;
eine Einrichtung zur Abarbeitung des dem übereinstimmenden Element zugeordneten Programm-Moduls;
eine Editiereinrichtung für die Datenbank zur Zuordnung eines Programm-Moduls zu den markierten Daten, wenn die markierten Daten nicht irgendeinem Element der Datenliste entsprechen; und
einem Puffer (712) zur Speicherung der markierten Daten und eine Einrichtung zur Eingabe der markierten Daten in den Puffer, wobei die Einrichtung zur Herstellung der Übereinstimmung die Daten im Puffer mit einem der Elemente der Datenliste in Übereinstimmung bringt.

14. Computersystem nach Anspruch 13, weiterhin enthaltend
ein erstes und ein zweites Computerprogramm, von denen das erste Computerprogramm Mittel zur Einspeicherung der markierten Daten und Mittel zur Übertragung der markierten Daten in das zweite Computerprogramm enthält und das zweite Computerprogramm Mittel zum Empfangen der eingespeicherten Daten vom ersten Computerprogramm;
sowie eine Einrichtung zur Herstellung einer Übereinstimmung der eingespeicherten Daten mit Elementen der ersten Datenliste, und
eine Einrichtung zur Abarbeitung des dem übereinstimmenden Element zugehörigen Programm-Moduls.

15. Computersystem zur Durchführung einer Operation im Zusammenhang mit auf einem Display (904) erscheinenden Daten, welche von einem Benutzer ausgewählt worden sind, mit
einer Datenbank (914), die eine Mehrzahl von Aufzeichnungen (920,922) enthält, von denen jede einen Schlüssel und mindestens einen Zweig enthält, wobei jeder Zweig einem Programm-Modul zugeordnet ist;
einer Markiereinrichtung für gewünschte Daten auf dem Display (904);
einer Einrichtung zur Herstellung einer Übereinstimmung der markierten Daten mit den Schlüsseln;
einer Wähleinrichtung für einen Zweig aufgrund eines vorbestimmten Kriteriums, wenn eine Übereinstimmung zwischen den markierten Daten und einem der Schlüssel gefunden wurde;
einer Einrichtung zur Abarbeitung des diesem Zweig zugeordneten Programm-Moduls; und
eine Editiereinrichtung für die Datenbank zur Zuordnung eines Schlüssels zu den markierten Daten, wenn diese Daten nicht zu irgendeinem Element der Datenliste paßt.

16. Computerprogramm nach Anspruch 15, weiterhin enthaltend einen Puffer (912) zur Speicherung der markierten Daten und eine Einrichtung zum Einspeichern der markierten Daten in den Puffer, wobei die Einrichtung zur Herstellung einer Übereinstimmung die Daten im Puffer mit den Schlüsseln in Übereinstimmung bringt.

17. Computersystem nach Anspruch 15, weiterhin enthaltend ein erstes und ein zweites Computerprogramm, von denen das erste Computerprogramm Maßnahmen zur Einspeicherung der markierten Daten und Maßnahmen zum Übertragen der eingespeicherten Daten in das zweite Computerprogramm enthält; und
das zweite Computerprogramm Mittel zum Empfang der eingespeicherten Daten aus dem ersten Computerprogramm sowie die Mittel zur Herstellung der Übereinstimmung der eingespeicherten Daten mit den Schlüsseln, die Auswählmittel für einen Zweig aufgrund eines vorbestimmten Kriteriums, wenn eine Übereinstimmung zwischen den markierten Daten und einem der Schlüssel gefunden wurde, und die Mittel zur Abarbeitung des diesem Zweig zugeordneten Programm-Moduls, enthält.

## Revendications

1. Procédé pour exécuter, au moyen d'un ordinateur, une opération associée à une donnée présente sur un dispositif de visualisation et choisie par un utilisateur, caractérisé en ce qu'il comprend les étapes consistant à prévoir une base de données contenant une liste de données et une liste de modules de programme, des éléments de la liste de données étant associés à des éléments de la liste de modules de programme, à accentuer une donnée désirée sur le dispositif de visualisation, à comparer la donnée accentuée avec les éléments se trouvant dans la liste de données, à exécuter, si une coïncidence est trouvée, le module de programme associé à l'élément coïncident et à éditer la base de données pour associer un module de programme à la donnée accentuée si la donnée accentuée ne coïncide pas avec un élément de la liste de données.

2. Procédé suivant la revendication 1 caractérisé en ce que l'étape d'édition comprend en outre l'étape consistant à produire une boîte de dialogue pour entrer le nom d'un module de l'ordinateur associé à la donnée accentuée non coïncidente.

3. Procédé suivant la revendication 1 caractérisé en ce qu'il comprend en outre l'étape consistant à capturer la donnée accentuée dans une mémoire tampon et l'étape de comparaison compare la donnée se trouvant dans la mémoire tampon avec les éléments dans la liste de données.

4. Procédé suivant la revendication 3 caractérisé en ce que la mémoire tampon est un tampon "bloc-notes" ou "clipboard".

5. Procédé suivant la revendication 1 caractérisé en ce que la base de données comporte une première base de données et une seconde base de données contenant chacune une liste de données et une liste de modules de programme, les éléments de la liste de données étant associés à des éléments de la liste de modules de programme, et il comprend en outre une étape de sélection pour sélectionner l'une des première et seconde bases de données pour qu'elles deviennent une base de données active, et l'étape de comparaison compare la donnée accentuée avec les éléments se trouvant dans la liste de données de la base de données active.

6. Procédé suivant la revendication 5 caractérisé en ce qu'il comprend en outre l'étape consistant à capturer la donnée accentuée dans une mémoire tampon et l'étape de comparaison compare la donnée se trouvant dans la mémoire tampon avec les éléments présents dans la liste de données de la base de données active.

7. Procédé pour exécuter, au moyen d'un ordinateur, une opération associée à une donnée présente sur un dispositif de visualisation et choisie par un utilisateur, caractérisé en ce qu'il comprend les étapes consistant à prévoir une base de données contenant une pluralité d'enregistrements, chaque enregistrement contenant une clé et au moins une branche, chaque branche étant associée à un module de programme, à obtenir une donnée accentuée sur le dispositif de visualisation, à comparer cette donnée accentuée avec les clés, à sélectionner, si une coïncidence est trouvée, une branche en se basant sur un critère prédéfini et à exécuter le module de programme associé à cette branche, et, si une coïncidence n'est pas trouvée, à éditer la base de données afin d'associer une clé à la donnée accentuée.

8. Procédé suivant la revendication 7 caractérisé en ce que l'étape d'édition comprend en outre l'étape consistant à produire une boîte de dialogue pour entrer des branches, critères et modules de programme.

9. Procédé suivant la revendication 7 caractérisé en ce que l'étape d'obtention de la donnée accentuée comprend l'étape consistant à capturer la donnée accentuée dans une mémoire tampon.

10. Procédé suivant la revendication 7 caractérisé en ce que la mémoire tampon est un tampon "bloc-notes" ou "clipboard".

11. Procédé suivant la revendication 7 caractérisé en ce que la base de données comporte une première base de données et une seconde base de données contenant chacune une pluralité d'enregistrements, chaque enregistrement contenant une clé et au moins une branche, chaque branche étant associée à un module de programme, il comporte en outre l'étape consistant à sélectionner l'une des première et seconde bases de données de manière qu'elle devienne une base de données active, l'étape de comparaison compare la donnée accentuée avec les clés se trouvant dans la base de données sélectionnée, et l'étape de sélection sélectionne une branche, dans la base de données sélectionnée, en se basant sur un critère prédéfini si une coïncidence est trouvée.

12. Procédé suivant la revendication 11 caractérisé en ce que l'étape d'obtention de la donnée accentuée comprend l'étape consistant à capturer la donnée accentuée dans une mémoire tampon.

13. Système d'ordinateur pour exécuter une opération associée à une donnée présente sur un dispositif de visualisation (704) et choisie par un utilisateur, caractérisé en ce qu'il comprend une base de données (714) contenant une liste de données et une liste de modules de programme, les éléments de cette liste de données étant associés à des éléments de la liste de modules de programme, un moyen pour accentuer une donnée désirée sur le dispositif de visualisation (704), un moyen pour essayer de faire coïncider la donnée accentuée avec l'un des éléments dans la liste de données, un moyen pour exécuter le module de programme associé à l'élément coïncident, un moyen pour éditer la base de données afin d'associer un module de programme à la donnée accentuée si cette donnée accentuée ne coïncide pas avec un élément quelconque dans la liste de données, et une mémoire tampon (712) pour stocker la donnée accentuée et un moyen pour capturer la donnée accentuée dans cette mémoire tampon, le moyen de recherche de coïncidence faisant coïncider la donnée se trouvant dans la mémoire tampon avec l'un des éléments de la liste de données.

14. Système d'ordinateur suivant la revendication 13 caractérisé en ce qu'il comprend en outre un premier programme d'ordinateur et un second programme d'ordinateur, le premier programme d'ordinateur comprenant un moyen pour capturer la donnée accentuée et un moyen pour envoyer cette donnée capturée vers le second programme d'ordinateur, ce second programme d'ordinateur comprenant un moyen pour recevoir la donnée capturée provenant du premier programme d'ordinateur, un moyen pour essayer de faire coïncider la donnée capturée avec les éléments présents dans la liste de données et un moyen pour exécuter le module de programme associé à l'élément trouvé coïncider avec la donnée.

15. Système d'ordinateur pour exécuter une opération associée à une donnée, présente sur un dispositif de visualisation (904), qui a été choisie par un utilisateur, caractérisé en ce qu'il comprend une base de données (914) contenant une pluralité d'enregistrements (920,922), chaque enregistrement contenant une clé et au moins une branche, chaque branche étant associée à un module de programme, un moyen pour accentuer une donnée désirée sur le dispositif de visualisation (904), un moyen pour essayer de faire coïncider cette donnée accentuée avec les clés, un moyen pour sélectionner une branche, en se basant sur un critère prédéfini, si une coïncidence entre la donnée accentuée et l'une des clés est trouvée, un moyen pour exécuter le module de programme associé à cette branche, et un moyen pour éditer la base de données afin d'associer une clé à la donnée accentuée si cette donnée accentuée ne coïncide pas avec un élément présent dans la liste de données.

16. Système d'ordinateur suivant la revendication 15 caractérisé en ce qu'il comprend en outre une mémoire tampon (912) pour stocker la donnée accentuée et un moyen pour capturer la donnée accentuée dans cette mémoire tampon et le moyen de recherche de coïncidence essaye de faire coïncider la donnée se trouvant dans la mémoire tampon avec les clés.

17. Système d'ordinateur suivant la revendication 15 caractérisé en ce qu'il comprend en outre un premier programme d'ordinateur et un second programme d'ordinateur, le premier programme d'ordinateur comprenant un moyen pour capturer la donnée accentuée et un moyen pour envoyer cette donnée capturée vers le second programme d'ordinateur, ce second programme d'ordinateur comprenant un moyen pour recevoir la donnée capturée provenant du premier programme d'ordinateur, un moyen pour essayer de faire coïncider la donnée capturée avec les clés, un moyen pour sélectionner une branche, sur la base d'un critère prédéfini, si une coïncidence est trouvée entre la donnée accentuée et l'une des clés, et un moyen pour exécuter le module de programme associé à ladite branche.
